**Europäisches Patentamt**

**European Patent Office**

**Office européen des brevets**

(11) Publication number: **0 252 978**
**B1**

# (12) EUROPEAN PATENT SPECIFICATION

(45) Date of publication of patent specification: **12.12.90**

(21) Application number: **87901142.7**

(22) Date of filing: **26.01.87**

(86) International application number:
**PCT/SE87/00030**

(87) International publication number:
**WO 87/04410 30.07.87 Gazette 87/17**

(51) Int. Cl.⁵: **B 65 G 13/00**

(54) **A COLLAPSIBLE ROLL CONVEYOR.**

(30) Priority: **27.01.86 SE 8600351**

(43) Date of publication of application:
**20.01.88 Bulletin 88/03**

(45) Publication of the grant of the patent:
**12.12.90 Bulletin 90/50**

(84) Designated Contracting States:
**DE FR GB**

(56) References cited:
**DE-A-1 756 208**
**DE-A-2 119 077**
**GB-B-1 160 200**
**US-A-2 938 614**

(73) Proprietor: **OTTOSSON, Folke**
**von Holtens väg 5**
**S-443 00 Lerum (SE)**

(72) Inventor: **OTTOSSON, Folke**
**von Holtens väg 5**
**S-443 00 Lerum (SE)**

(74) Representative: **MacFie, W.R. et al**
**Albihn West AB Stora Nygatan 15**
**S-411 08 Göteborg (SE)**

Courier Press, Leamington Spa, England.

EP 0 252 978 B1

## Description

The present invention relates to a device for moving of objects along horizontal or inclined surfaces, e.g. within narrow and low spaces.

The invention enables a complete roll conveyor system for moving of objects.

Known systems are only suitable for commercial use and not intended for private use, e.g. in station-wagons. This is due to the fact that known systems are:

a) stationary and often adapted to certain terminal buildings or cars,

b) only suited for use with pallets and pallet loaders,

c) not adapted to be carried along during transport of light objects, distribution, etc.

Known systems are normally rigid and made self-supporting and tailormade for a certain use. The self-supporting design makes them too heavy to handle by one person so that facilities are needed if they are to be lifted to or from a vehicle. So far, no inexpensive means are available to solve this aspect of the transporting problem, which comprise dangerous manual lifting operations.

US—A—2 938 614 discloses such a self-supporting collapsible conveyor. Due to its self-supporting design, this prior art conveyor is rather bulky, when in its storage mode, and not well suited to be carried along in a car.

The object of the present invention is therefore to solve this problem, so that these injurious effects can be avoided.

This object is achieved at a roll conveyor comprising support means and rollers journalled on through shafts, which are linked together by means of alternatively arranged pivotally connected links. The roll conveyor is characterized in, that one side of the plane of the conveyor the support means are arranged on links mounted between adjacent rollers on a mutual shaft, and that these links are placed separately, so that links on each side of one roller are linked to different adjacent shafts and pivotable at least 135° to each side of the conveyor plane.

The invention is described below with reference to an embodiment shown in the accompanying drawings, in which

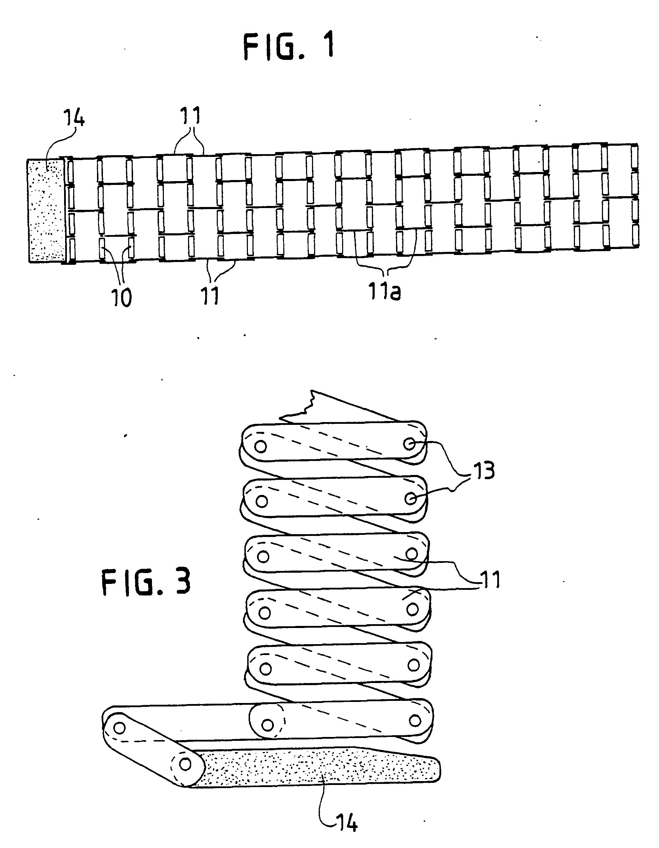

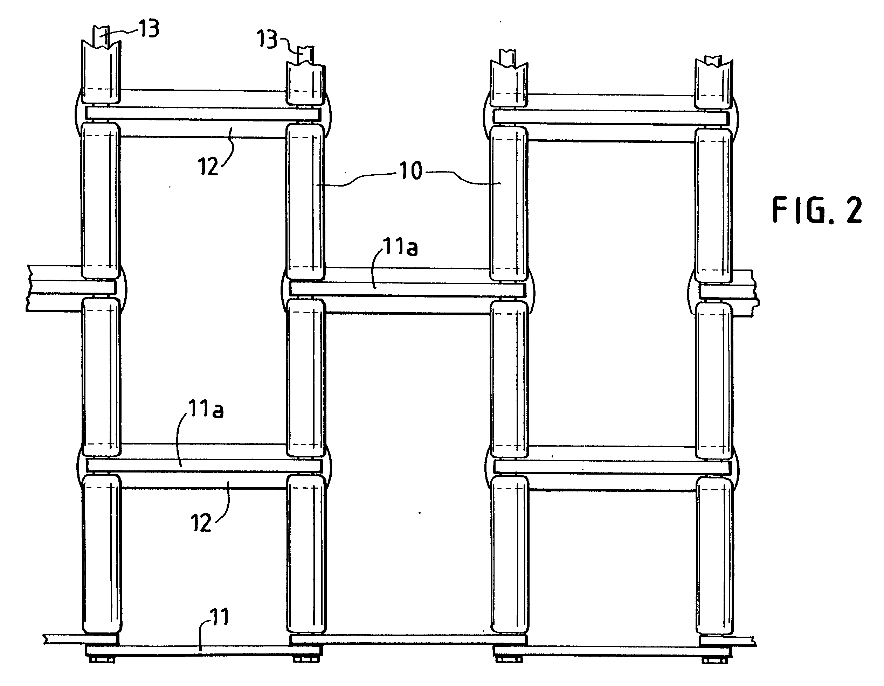

Figure 1 is an elevation view of the roll conveyor according to the invention,

Figure 2 is a part enlargement of the conveyor in Figure 1,

Figure 3 depicts the conveyor in a collapsed state, and

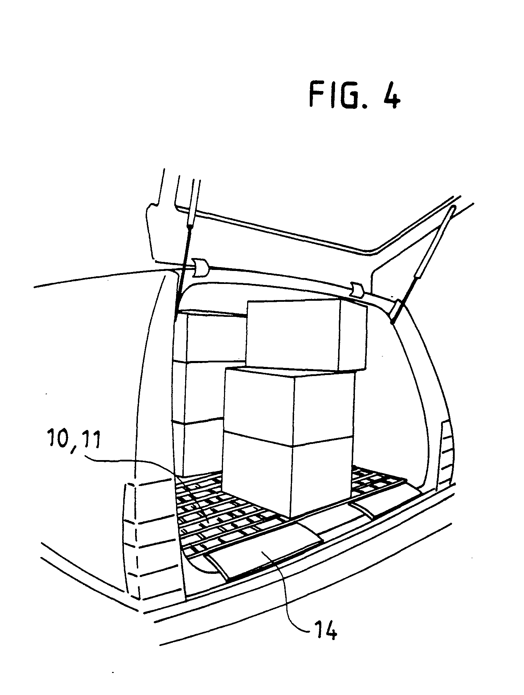

Figure 4 depicts the roll conveyor during use in a station-wagon.

The roll conveyor comprises a number of rollers 10 which are rotatably journalled on shafts 13. Links 11, 11a are pivotally connected via said shafts 13. Links 11a, mounted between adjacent rollers 10 on a mutual shaft, are provided with support means 12 on one side of the plane of the conveyor, so that the load is distributed evenly, via said support surfaces upon the base surface of a transporting vehicle.

The links 11a are placed separately, so that links on each side of one roller 10 are linked to different adjacent shafts 13 and can pivot at least 135° to each side of the conveyor plane.

Since the shafts 13 act as articulation points for the links 11, 11a the conveyor can be adapted to the base surface, e.g. at thresholds and stairs.

A turntable can be used between two conveyors placed in right angle to each other.

An end segment 14 is linked to the links 11, 11a of the conveyor. This segment 14 is produced from a material of non-skid quality anchoring the roll conveyor to the base surface.

The objects may be fastened by straps, when they have been shifted into the vehicle.

When not in use, the roll conveyor can easily be folded about the shafts 13, in any direction, into a compact size, without the need for tools. This means that the conveyor according to the invention is convenient to carry or store.

The conveyor can also be transported on its own rollers, when turned around.

The end segment can be folded in below the conveyor, acting as a stop preventing an object on said conveyor to slide from the conveyor.

The foldability can be useful when shifting an object from the ground into the cargo space of a station-wagon.

The roll conveyor can have a wide range of applications, e.g. it may replace a pallet loader.

## Claims

1. A collapsible roll conveyor comprising support means (12) and rollers (10) journalled on through shafts (13), which are linked together by means of alternatively arranged pivotally connected links (11, 11a), characterized in that the support means (12) are arranged on one side of the plane of the conveyor on links (11a) mounted between adjacent rollers (10) on a mutual shaft (13), and that these links (11a) are placed separately, so that links on each side of one roller (10) are linked to different adjacent shafts (13) and can pivot at least 135° to each side of the conveyor plane.

2. A roll conveyor according to claim 1, characterized in, that the end links (11, 11a) are connected to an end segment (14) of non-skid quality material.

## Patentansprüche

1. Zusammenfaltbares Förderband bestehend aus einem Traggerüst (12) und Rollen (10), die sich auf Achsen (13) befinden und die durch abwechselnd angeordnete, schwenkbar verbundene Hebel (11, 11a) miteinander verbunden sind, dadurch gekennzeichnet, daß das Traggerüst (12) auf einer Seite der Fördererebene an Hebeln (11a) angeordnet ist, die zweschen benachbarten Rollen (10) auf einer gemeinschaftlichen Welle (13) befestigt sind und daß diese Hebel (11a) voneinander getrennt sind, so daß Hebel auf jeder Seite der Rollen (10) an verschiedenen benachbarten Wellen (13) angelenkt sind und um wenigstens 135° nach jeder Seite der Fördererebene schwenken können.

2. Förderband nach Anspruch 1, dadurch gekennzeichnet, daß die Hebel (11, 11a) an den Enden mit einem Endsegment (14) aus einem rutschsicheren Material verbunden sind.

**Revendications**

1. Convoyeur à rouleaux pliant comprenant des moyens de support (12) et des rouleaux (10), tourillonnés sur des arbres traversants (13) qui sont accouplés entre eux au moyen d'articulations (11, 11a) montées pivotantes en disposition alternée, caractérisé par le fait que les moyens de support (12) sont disposés sur l'un des côtés du plan du convoyeur sur des articulations (11a) montées entre des rouleaux adjacents (10) sur un arbre commun (13) et que ces articulations (11a) sont placées séparément, de manière que les articulations de part et d'autre d'un rouleau (10) soient accouplées à différents arbres adjacents (13) et puissent pivoter d'au moins 135° sur chaque côté du plan du convoyeur.

2. Convoyeur à rouleaux selon la revendication 1, caractérisé par le fait que les articulations d'extrémité (11, 11a) sont reliées à un segment d'extrémité (14) en matériau de propriétés antidérapantes.

# FIG. 1

# FIG. 3

FIG. 2

# FIG. 4

10,11

14